# EUROPEAN PATENT SPECIFICATION

(11) **EP 2 118 364 B1**
(45) Date of publication and mention of the grant of the patent: **30.07.2014**
(21) Application number: 08714059.6
(22) Date of filing: 29.01.2008
(51) Int. Cl.: D21H 13/36, D21H 27/00, B01D 53/00

(54) **FLEXIBLE FIBROUS MATERIAL, POLLUTION CONTROL DEVICE, AND METHODS OF MAKING THE SAME**
FLEXIBLES FASERMATERIAL, ABGASREINIGUNGSVORRICHTUNG SOWIE ENTSPRECHENDE HERSTELLUNGSVERFAHREN
MATÉRIAU FIBREUX SOUPLE, DISPOSITIF DE CONTRÔLE DE POLLUTION, ET PROCÉDÉS DE FABRICATION

(30) Priority: 19.02.2007 US 890548 P
(43) Date of publication of application: 18.11.2009
(60) Divisional application: 12155556.9
(73) Proprietor: 3M Innovative Properties Company, Saint Paul, MN 55133-3427 (US)
(72) Inventor: DE ROVERE, Anne, N., Saint Paul, Minnesota 55133-3427 (US); HOWORTH, Gary, F., Saint Paul, Minnesota 55133-3427 (US); MANDANAS, Michael, Patrick, M., Saint Paul, Minnesota 55133-3427 (US)
(74) Representative: Hermann, Gerhard
(86) International application number: PCT/US2008/052241
(87) International publication number: WO 2008/103525

(56) References cited:
- EP-A- 0 795 644
- WO-A-97/02413
- DE-C1- 3 837 746
- US-A- 3 001 571
- US-A- 4 389 282
- US-A- 4 521 333
- US-A- 5 882 608
- US-A1- 2005 232 827

## Description

Pollution control devices are employed on motor vehicles to control atmospheric pollution. Two types of such devices, catalytic converters and diesel particulate filters or traps, are currently in widespread use. Catalytic converters contain a catalyst, which is typically coated onto a monolithic structure mounted in the converter. The monolithic structures are typically ceramic, although metal monoliths have been used. The catalyst oxidizes carbon monoxide and hydrocarbons, and reduces the oxides of nitrogen in automobile exhaust gases to control atmospheric pollution. Diesel particulate filters or traps are generally wall flow filters which have honeycombed monolithic structures typically made from porous crystalline ceramic material.

Typically, as constructed, each type of these devices has a metal housing which holds within it a monolithic structure or element that can be metal or ceramic, and is most commonly ceramic. The ceramic monolith generally has very thin walls to provide a large amount of surface area and is fragile and susceptible to breakage. It also has a coefficient of thermal expansion generally an order of magnitude less than the metal (usually stainless steel) housing in which it is contained. To avoid damage to the ceramic monolith from road shock and vibration, to compensate for the thermal expansion difference, and to prevent exhaust gases from passing between the monolith and the metal housing, ceramic mat or intumescent sheet materials are often disposed between the ceramic monolith and the metal housing. The process of placing or inserting the ceramic monolith and mounting material within the metal housing is also referred to as canning and includes such processes as wrapping an intumescent sheet or ceramic mat around the monolith and inserting the wrapped monolith into the housing.

Ceramic mat and intumescent sheet materials are commonly fabricated by wet laid processes (for example, generally according to a papermaking process), and by air laid processes, that may optionally include a reinforcing step such as, for example, needletacking, stitch-bonding, hydroentanglement, or binder impregnation.

US-A-4389282 discloses a method of forming a flexible ceramic fiber board which is formed from fibers with a homogeneous latex binder coating.

In one aspect, the present invention provides a flexible fibrous material comprising:
inorganic fibers having a total weight and bonded together by a binder, wherein the binder comprises at least one of:
   (a) a first organic polymer and a flocculent, the flocculent comprising a second organic polymer having cationic groups, or
   (b) a reaction product of the first organic polymer and the flocculent, wherein the flexible fibrous material has a total organic component weight that is from 0.5 to 9 percent of the total weight of the inorganic fibers, and wherein the flexible fibrous material has a dry basis weight of from 400 to 15000 grams per square meter, and wherein, on a dry weight basis, the flexible fibrous material comprises from 40 to 99.5 percent by weight of the inorganic fibers, from greater than 0 up to 60 percent by weight of itumescent material.

Flexible fibrous material according to the present invention can be operatively adapted (for example, dimensioned, designed, etc.) for use in certain pollution control devices.

Accordingly, in another aspect, the present invention provides a pollution control device comprising:
a housing;
a pollution control element disposed within said housing; and
a flexible fibrous material according to any one of claims 1 to 14 disposed adjacent to, or within, the housing.

In certain embodiments, the flexible fibrous material is disposed between the pollution control element and the housing.

In another aspect, the present invention provides a method of forming a flexible fibrous material comprising the steps:
(a) forming a slurry by mixing, in aqueous solution, components comprising:
   inorganic fibers having a total weight; and
   organic components, wherein the organic components comprise an emulsified first organic polymer and a flocculent, the flocculent comprising a second organic polymer having cationic groups;
(b) flocculating at least a portion of the emulsified first organic polymer onto at least a portion of the inorganic fibers to provide a flocculated slurry;
(c) dewatering the flocculated slurry to provide a dewatered slurry;
(d) further drying the dewatered slurry to form the flexible fibrous material, wherein the flexible fibrous material has a total organic component weight of from 0.5 to 9 percent of the total weight of the inorganic fibers,
wherein, on a dry weight basis, the flexible fibrous material comprises from 40 to 99.5 percent by weight of the inorganic fibers, from greater than 0 up to 60 percent by weight of itumescent material.

In certain embodiments, step (c) comprises forming the slurry into a sheet material (or three-dimensionally shaped article such as, for example, and end cone) made by a wet laid process, and step (d) comprises forming the flexible fibrous material from the sheet material. The sheet or three-dimensionally shaped article may pressed, coated, embossed, textured, or modified by other means. The sheet or three-dimensionally shaped article may be formed or laminated onto other materials or have other materials formed or laminated thereupon. In certain embodiments, the method further comprises pressing the dewatered slurry prior to step (d). In certain embodiments, steps (b) and (c) are simultaneous. In certain embodiments, the components further comprise unexpanded intumescent material. In certain of these embodiments, the method further comprises expanding the unexpanded intumescent material.

In yet another aspect, the present invention relates to a flexible fibrous material made according to the above method.

In yet another aspect, the present invention provides a slurry comprising water having dispersed or dissolved therein:
inorganic fibers having a total weight; and
organic components comprising at least one of:
   (a) an emulsified first organic polymer and a flocculent, the flocculent comprising a second organic polymer having cationic groups, or
   (b) a reaction product of the emulsified first organic polymer and the flocculent,
wherein the slurry has a total organic component weight that is from 0.5 to 9 percent of the total weight of the inorganic fibers, and
wherein, on a dry weight basis, the flexible fibrous material comprises from 40 to 99.5 percent by weight of the inorganic fibers, from greater than 0 up to 60 percent by weight of itumescent material.

The following embodiments may be applied alone or in any combination to all aspects of the present invention and specific embodiments set forth above.

In certain embodiments, on a dry weight basis, the flexible fibrous material comprises from 91 to 99.5 percent by weight of the inorganic fibers, and the flexible fibrous material has a total organic component weight that is from 0.5 to 9 percent by weight of the inorganic fibers.

In certain embodiments, the flexible fibrous material further comprises an unexpanded intumescent material. The flexible fibrous material comprises, on a dry weight basis: from 40 to 99.5 percent by weight of the inorganic fibers, from greater than 0 up to 60 percent by weight of intumescent material, and wherein the flexible fibrous material has a total organic component weight that is from 0.5 to 9 percent by weight of the inorganic fibers. In certain of these embodiments, the intumescent material comprises vermiculite, graphite, or a combination thereof.

In certain embodiments, the first organic polymer has anionic groups. In certain embodiments, the first organic polymer is free of anionic groups. In certain embodiments, the first organic polymer is selected from the group consisting of acrylic polymers and vinyl polymers. In certain embodiments, the first organic polymer comprises a copolymer of monomers comprising ethylene and vinyl acetate. In certain embodiments, the flocculent further comprises a metal cation (for example, an aluminum cation). In certain embodiments, the inorganic fibers comprise glass fibers. In certain embodiments, the inorganic fibers comprise ceramic fibers. In certain embodiments, on a dry weight basis, the flexible fibrous material comprises less than 50 percent by weight of shot. In certain embodiments, the flocculent is selected from the group consisting of Flocculent 1 to Flocculent 30, and combinations thereof.

Advantageously, flexible fibrous materials prepared according to the teachings of the present invention have ratios of total organic component weight to inorganic fiber weight that are significantly below those practiced in the corresponding wet laid art, yet in many cases while achieving comparable mechanical properties such as tensile strength and flexibility. Accordingly, if used in pollution control devices, they have a low degree of binder burnout upon initial use (with concomitant low odor and environmental pollution). Moreover, in relatively low temperature applications (for example, diesel particulate filters), reductions in the total organic component content typically result in increased performance, since changes (for example, stiffening or reduction in resiliency) in the binder that occur during use are typically detrimental to physical properties of such flexible fibrous material.

Flexible fibrous material according to the present invention may be fabricated by wet laid process techniques such that it has mechanical properties suitable for use in pollution control devices, while having binder content comparable to, or more typically substantially lower than, levels practiced in the wet laid process art.

As used herein:
the term "substantially dry" means dry to the touch;
the terms "emulsion" and "emulsified" include polymer emulsions and polymer latexes;
the term "flexible" means capable of being bent or flexed without suffering more than superficial or inconsequential damage; and
the term "inorganic fibers" includes both inorganic fibers and associated shot, unless otherwise specified;
the term "organic" means having at least one carbon-hydrogen bond;
the term "combined organic component weight" refers to the combined total weight of all organic components.

In this application, all numerical ranges in the specification and claims are to be considered as inclusive of their end points, unless otherwise indicated. Further, unless otherwise noted, all parts, percentages, and ratios in the specification and claims are on a weight basis.

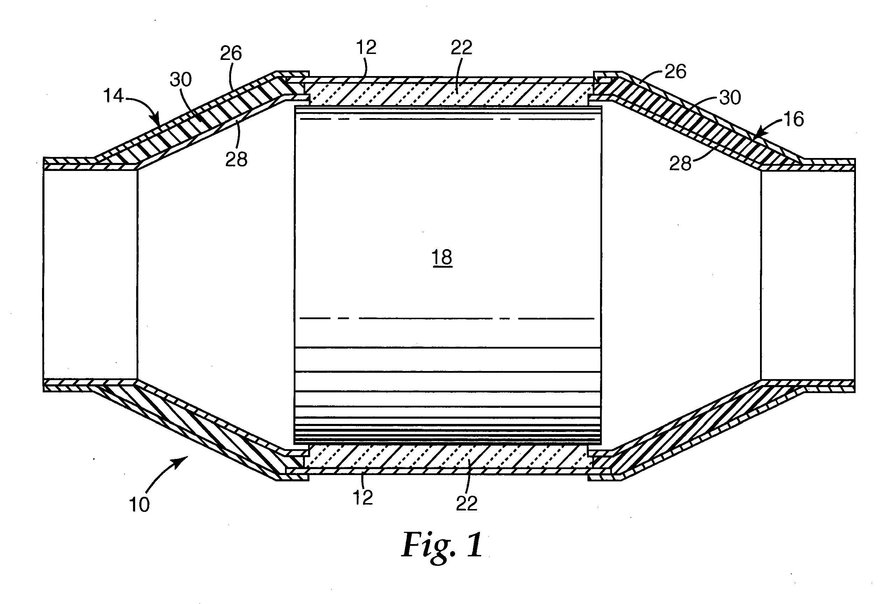

Fig. 1 shows a cross-sectional view of a pollution control device according to one exemplary embodiment of the present invention.

While the invention is amenable to various modifications and alternative forms, specifics thereof have been shown by way of example in the drawing and will be described in detail. It should be understood, however, that the intention is not to limit the invention to the particular embodiments described.

Fig. 1 shows an exemplary pollution control device. Referring now to Fig. 1, pollution control device 10 includes housing 12 and has a generally conical inlet 14 and outlet 16 (that is, commonly referred to as end cones). Housing 12, which is commonly referred to as a can or a casing, is usually made of metal (for example, stainless steel). Disposed within housing 12 is a monolithic structure 18 made of a ceramic or metallic material, and which may include a catalyst. An insulating material 22 surrounds the monolithic structure 18. Monolithic structure 18 may be, for example, a catalytic converter element or a diesel particulate filter element. A flexible fibrous material according to the present invention may be used as insulating material 22.

The inlet 14 and outlet 16 regions of the metal housing include an inner end cone housing 28 and an outer end cone housing 26. Insulation material 30 is positioned between the inner end cone housing 28 and the outer end cone housing 26. A flexible fibrous material according to the present invention may be used as insulation material 30.

Many pollution control devices are well known in the art and include, for example, catalytic converters, end cone sub-assemblies, and diesel particulate traps and filters. Further details concerning such devices may be found, for example, in U.S. Pat. No. 5,882,608 (Sanocki e al.) and U.S. Publ. Pat. Appln. No. 2006/0154040 A1 (Merry).

Flexible fibrous material according to the present invention may be disposed between the monolith and the housing in similar fashion for either a catalytic converter or for a diesel particulate filter. This can be done, for example by wrapping the monolith with the flexible fibrous material and inserting the wrapped monolith into the housing, or by wrapping the inner end cone housing with flexible fibrous material and then welding the outer end cone housing to the inner end cone housing.

Flexible fibrous materials according to the present invention may have any dimension and/or thickness. However, for use in pollution control devices the thickness of flexible fibrous material according to the Caliper Measurement General Procedure (hereinbelow) is typically in a range of from 0.1 inch (0.3 cm), 0.15 inch (0.38 cm), or 0.2 inch (0.5 cm) up to 0.3 (0.8 cm), 0.5 (1.3 cm), 0.7 (1.8 cm) or 1 inch (2.5 cm), or more.

For use in pollution control devices, flexible fibrous material according to the present invention typically have a dry basis weight of from 400, 700, 1000, 1500, or 2000 grams per square meter (gsm) up to 5000, 10000, or 15000 gsm. For example, non-intumescent flexible fibrous materials typically have a dry basis weight of from 400 to 2500 gsm, more typically 1000 to 1500 gsm. Intumescent flexible fibrous materials typically have a dry basis weight of from 1200 to 15000 gsm, more typically 2400 to 8000 gsm.

Useful inorganic fibers include for example, fiberglass, ceramic fibers, non-oxide inorganic fibers, such as graphite fibers or boron fibers, and mixtures thereof.

Useful ceramic fibers include, for example, aluminoborosilicate fibers, aluminosilicate fibers, alumina fibers, heat-treated versions thereof, and mixtures thereof. Examples of suitable aluminoborosilicate fibers include those commercially available under the trade designations "NEXTEL 312 CERAMIC FIBERS", "NEXTEL 440 CERAMIC FIBERS", and "NEXTEL 550 CERAMIC FIBERS" from 3M Company, St. Paul, Minnesota. Examples of suitable aluminosilicate fibers include those available under the trade designations "FIBERFRAX" 7000M from Unifrax Corp., Niagara Falls, New York, "CERAFIBER" from Thermal Ceramics, Augusta, Georgia; and "SNSC Type 1260 D1" from Nippon Steel Chemical Company, Tokyo, Japan. Examples of suitable commercially available alumina fibers include polycrystalline alumina fibers available from Saffil, Widnes, England under the trade designation "SAFFIL".

Examples of other suitable inorganic fibers include: quartz fibers, amorphous and crystalline fibers of high silica content, alumina fibers and high alumina fibers, amorphous and crystalline alumina-silica fibers, oxide and non-oxide fibers, metallic fibers, fibers formed by blowing, spinning and pulling from a melt, sol-gel formed fibers, fibers formed from organic precursors, glass fibers, leached glass fibers, and other fibers of a substantially inorganic composition. Suitable inorganic fibers may also comprise a surface coating or a sizing of organic and inorganic material. Suitable inorganic fibers may obviously be used alone or in combination with other suitable inorganic fibers.

Generally speaking, inorganic fibers containing a substantial amount of shot are less expensive than shot-free, or partially cleaned inorganic fibers. However, shot-free inorganic fibers generally provide more resilient articles (for example, webs, sheets, mats), which better maintain holding forces at all temperatures including a return to room temperature. Accordingly, flexible fibrous material according to the present invention may contain less than 75, 70, 65, 60, 55, 50, 45, or even less than 40 percent by weight, or less, of shot based on the total dry weight of the flexible fibrous material.

Useful first organic polymers include, for example, those acrylic polymers, vinyl polymers (for example, copolymers of monomers comprising ethylene and vinyl acetate), polyurethanes, and silicone polymers having anionic groups (for example, end groups and/or pendant side chain groups), typically many, although it is not a requirement. Optionally, additional organic polymer(s) may be used in combination with the first organic polymer. The first organic polymer is typically used as an aqueous anionically stabilized polymer emulsion (for example, a latex), although solvent-based polymers, or 100 percent solids polymers may be useful in some cases.

Typically, the first organic polymer has a glass transition temperature of less than 30 degrees Celsius (° C), 0 ° C, -10 ° C, -20 ° C, -30 ° C, or even less than -40 ° C, but this is not a requirement. Further, the first organic polymer may comprise an elastomer.

Useful aqueous polymer emulsions (including latex emulsions) include, for example, acrylic polymer emulsions, polyurethane emulsions, silicone polymer emulsions, epoxy polymer emulsions, butyl rubber emulsions, vinyl polymer emulsions, vinyl acetate polymer emulsions, and combinations thereof, that are suitable for providing strength and flexibility to the flexible fibrous material. Examples of useful commercially available aqueous polymer emulsions include, for example, those available under the trade designations "RHOPLEX HA-8" (a 44.5% by weight solids aqueous emulsion of acrylic copolymers) marketed by Rohm and Haas, Philadelphia, Pennsylvania, and "AIRFLEX 600BP" (a 55% solids ethylene vinyl acetate copolymer) marketed by Air Products, Allentown, Pennsylvania, and combinations thereof.

Useful flocculents include organic polymers having cationic groups. Typically, the organic polymers are water-swellable or water-soluble, however this is not a requirement. For example, the polymer may be merely water-dispersible. Examples of suitable flocculents include solutions (typically aqueous) or dispersions of poly(diallyldimethylammonium chloride) (hereinafter PDADMAC) and copolymers of dimethylamine and epichlorohydrin. Optionally, the flocculent may further comprises a metal cation (for example, aluminum) which may be present in a dissociated, complex (for example, a hydrate, chloride, or chlorohydrate), or polymeric form (for example, as a poly(metal oxide) or oxychloride).

Examples of suitable commercially available flocculents, include water treatments available from Garratt Callahan, Burlington, California, under the trade designations "FORMULA 7644" (aqueous solution of PDADMAC), "FORMULA 7643", "FORMULA 7642", "FORMULA AH - 423", "FORMULA 7602", "FORMULA 7603", "FORMULA 7552", "FORMULA 7622", "FORMULA 7655", or "FORMULA 7568"; from Mid-South Chemical, Ringold, Louisana, under the trade designation "MP 9307" (believed to be an aqueous solution of a copolymer of dimethylamine and epichlorohydrin); from Ciba Specialty Chemicals, Tarrytown, New York, under the trade designation "ZETAG 7125" (aqueous solution of PDADMAC), "ZETAG 7127" (aqueous solution of PDADMAC); and from Hawkins, St. Paul, Minnesota, under the trade designations "ARCTICFLOC AF12104" (aqueous solution of PDADMAC), "AQUA HAWK 2987" (aqueous solution of polyaluminum hydroxychloride and a cationic organic polymer), "AQUA HAWK 101" (aqueous solution of polyaluminum hydroxychloride and a poly(quatemary amine)), "AQUA HAWK 427" (aqueous solution of polyaluminum hydroxychloride and a poly(quatemary amine)), and "AQUA HAWK 2757" (aqueous solution of aluminum-based polyinorganic and a cationic organic polymer), and combinations thereof.

It will be recognized that polyamines exist in aqueous media in equilibrium with protonated (that is, cationic and polycationic) forms.

In general, the flocculent is used in an amount effective to cause flocculation of the emulsified first organic polymer, although other amounts may also be used. For example, the flocculent (on a solids basis) may be present in an amount of at least 1, 5, 10, 15, 20, or even at least 100 percent of the weight of the first organic polymer.

The binder may include at least one plasticizer. Plasticizers tend to soften a polymer matrix and thereby contribute to the flexibility and moldability of the flexible fibrous material. The binder may also include one or more tackifiers or tackifying resins, for example, to aid in holding the flexible fibrous material together. An example of a suitable tackifier is commercially available under the trade designation "SNOWTACK 810A" from Eka Nobel, Inc., Toronto, Canada.

Flexible fibrous material according to the present invention comprises one or more intumescent materials (which may be unexpanded, partially expanded, or a mixture thereof), typically, depending on the desired end use. For example, for use at temperatures above about 500 ° C, unexpanded vermiculite materials are suitable since they start to expand at a temperature range of from about 300 ° C to about 340 ° C. This may be useful to fill the expanding gap between an expanding metal housing and a monolith in a catalytic converter. For use at temperatures below about 500 ° C, such as in diesel monoliths or particulate filters, expandable graphite or a mixture of expandable graphite and unexpanded vermiculite materials may be desired since expandable graphite starts to expand or intumesce at about 210 ° C. Treated vermiculites are also useful and typically expand at a temperature of about 290 ° C.

Examples of useful intumescent materials include unexpanded vermiculite flakes or ore, treated unexpanded vermiculite flakes or ore, partially dehydrated vermiculite ore, expandable graphite, mixtures of expandable graphite with treated or untreated unexpanded vermiculite ore, hydrobiotite, water swellable synthetic tetrasilicic fluorine type mica described in U.S. Pat. No. 3,001,571 (Hatch), alkali metal silicate granules as described in U.S. Pat. No. 4,521,333 (Graham et al.), processed expandable sodium silicate (for example, insoluble sodium silicate commercially available under the trade designation "EXPANTROL" from 3M Company), and mixtures thereof. An example of a commercially available expandable graphite material is that available under the trade designation "GRAFOIL Grade 338- 50" expandable graphite flake, from UCAR Carbon Co., Cleveland, Ohio. Treated unexpanded vermiculite flakes or ore includes unexpanded vermiculite treated by processes such as by being ion exchanged with ion exchange salts such as ammonium dihydrogen phosphate, ammonium nitrate, ammonium chloride, potassium chloride, or other suitable compounds as is known in the art.

Flexible fibrous material according to the present invention comprises, on a dry weight basis, from 40 to 99.5 percent by weight of the inorganic fibers (for example, from 40 to 98.5 percent by weight, from 50 to 97 percent by weight, or from 60 to 97 percent by weight), from 0.5 to 9 percent by weight of the binder (for example, from 0.5, 1.0, or 1.5 up to 3, 4, 5, 6, 7 or 8 percent by weight), and from greater than 0 up to 60 percent by weight of intumescent material.

Flexible fiber material of the invention may optionally contain one or more inorganic fillers, inorganic binders, organic fibers, and mixtures thereof.

Examples of fillers include delaminated vermiculite, hollow glass microspheres, perlite, alumina trihydrate, magnesium phosphate hexahydrate, calcium carbonate, and mixtures thereof. Fillers may be present in the flexible fibrous material at levels of up to 10 percent, desirably up to 25 percent, and more desirably up to 50 percent by dry weight of the flexible fibrous material.

Examples of inorganic binders include micaceous particles, kaolin clay, bentonite clay, and other clay-like minerals. Inorganic binders may be present in the flexible fibrous material at levels up to 5 percent, desirably up to 25 percent, and more desirably up to 50 percent by dry weight of the flexible fibrous material.

Optionally, organic fibers (for example, staple fibers or fibrillated fibers) may be included in the flexible fibrous material of the present invention, for example, to provide wet strength during processing and dry strength and resiliency to mat and sheet mounting materials prior to canning. However, in general, it is desirable to minimize the content of such fibers as they contribute to objectionable bum off.

Other additives or process aides that may be included in flexible fibrous material according to the present invention include defoaming agents, surfactants, dispersants, wetting agents, salts to aid precipitation, fungicides, and bactericides.
Flexible fibrous material according to the present invention is typically formulated to have physical properties suitable for in pollution control devices, although it may be formulated with different physical properties if desired. For example, flexible fibrous material may have sufficient flexibility to pass the FLEXIBILITY TEST (hereinbelow) using a mandrel having a diameter of 6 inches (15.24 cm), 5 inches (12.70 cm), 4 inches (10.16 cm), 3 inches (7.62 cm), 2 inches (5.08 cm), 1 inch (2.54 cm), ¾ inch (1.91 cm), or even ½ inch (1.27 cm).

Moreover, flexible fibrous material may have a tensile strength according to the TENSILE STRENGTH TEST (hereinbelow) test of at least 7.3 pounds per square inch (psi, 50 kPa), 10.7 psi (75 kPa), 14.5 psi (100 kPa).

Flexible fibrous material according to the present invention may be formed by any suitable technique including, for example, air laid and wet-laid methods.

In one exemplary useful method, a slurry in water (for example, typically greater than 95 percent by weight water) of the inorganic fibers, first organic polymer, is prepared and combined with the flocculent. Optional ingredients (for example, defoaming agent, intumescent material or filler) are then added (if used) and the slurry is then formed into flexible fibrous material by traditional wet-laid non-woven papermaking techniques. Briefly, this process includes mixing the components and pouring the slurry onto a wire mesh or screen to remove most of the water. The formed sheet is then dried to form the flexible fibrous material. The flexible fibrous material may then be converted to desired forms such as sheets and mats. The process may be carried out in a step-wise, batch, and/or continuous fashion.

When making the slurry, higher density materials such as the optional intumescent material and higher density fillers (if used) may be added to the slurry in a smaller volume mixing vessel at a constant rate just prior to the depositing step. Slurries containing fillers and intumescent materials are agitated sufficiently so to prevent these particles from settling out in the mixing tank prior to pouring the slurry onto the mesh. Such slurries should typically be partially dewatered almost immediately after being deposited on the mesh so to prevent undesirable settling of the higher density particles. Vacuum dewatering of the slurries is desirable. Useful drying methods include wet pressing the dewatered slurries through compression or pressure rollers followed by passing the material through heated rollers and forced hot air drying as is known in the art.

Flexible fibrous materials according to the invention may further include edge protection materials. Examples of suitable materials include a stainless steel wire screen wrapped around the edges as described in U.S. Pat. No. 5,008,086 (Merry), and braided or rope-like ceramic fiber braiding or metal wire material as described in U.S. Pat. No. 4,156,533 (Close et al.). Edge protectants may also be formed from compositions having glass particles as described, for example, in EP 639 701 A1 (Howorth et al.), EP 639 702 A1 (Howorth et al.), and EP 639 700 A1 (Stroom et al.).

### EXAMPLES

### CALIPER MEASUREMENT GENERAL PROCEDURE

A digital micrometer is calibrated to read zero inches (0 cm) when placed over a cylindrical deadweight that is placed on a smooth metal base plate. The cylindrical deadweight has a base diameter of 2.5 inches (6.35 cm) and has sufficient weight to apply a pressure of 0.712 psi (4.9 kPa). The cylindrical deadweight is then placed over the specimen (for example, a sheet) that is being measured and the caliper of the specimen is determined by placing the calibrated digital micrometer over the deadweight.

### TENSILE STRENGTH TEST

A specimen to be tested is cut into one inch (2.5 cm) wide by seven inches (18 cm) long strips after the caliper is measured according to the CALIPER MEASUREMENT PROCEDURE (above). The ends of one strip are clamped into one inch square pneumatic grips in a suitable load frame capable of recording peak tensile load at the samples breaking point such that there is six inches (15 cm) of strip between the ends of the grips. The strip is then pulled apart at a speed of 1. inch (2.54 cm) per minute, and the peak load supported by the sample before breaking is recorded. The tensile strength is defined as the peak load divided by the cross sectional area calculated by multiplying the width of the sample divided by the caliper.

### FLEXIBILITY TEST

Verify that the specimen to be tested is not already cracked by bending slightly on both sides and visually inspecting. Cracked specimens should not be used. Cut 1-inch wide strip(s) of the specimen to be tested, minimum 4 inches (10 cm) long, using a stainless steel rule die. Gently wrap one face of the strip 180 degrees (half way) around a 6-inch (15.24-cm) diameter cylindrical mandrel (at least 2 inches (5.1 cm) in length) using the minimum necessary force to ensure the strip is around the mandrel and hold the strip for at least 30 seconds. Visually inspect the strip for fiber separation or cracking. Repeat using progressively smaller diameter mandrels with diameters of 5 inches, 4 inches, 3 inches, 2 inches, 1 inch, 0.75 inch, 0.5 inch) (12.70 cm, 10.16 cm, 7.62 cm, 5.08 cm, 2.54 cm, 1.91 cm, 1.27 cm) until either fiber separation or cracking is observed. Continue until cracking is visually observed. A specimen passes the Flexibility Test, if no fiber separation or cracking other than inconsequential or superficial cracking is visually observed.

### GENERAL PROCEDURE FOR PREPARING FIBROUS SHEET

Tap water (3 liters, 18 ° C) and 60 grams (g) of inorganic fibers (obtained under the trade designation "HA BULK FIBER" from Thermal Ceramics Augusta, Georgia, and cleaned to a shot content of less than 50 percent by weight) are added to a blender. The blender is operated on low speed for five seconds. The resultant slurry is rinsed into a mixing container equipped with a paddle mixer using one liter of tap water (18 ° C). The slurry is diluted with an additional one liter of tap water (18 ° C). The diluted slurry is mixed at medium speed to keep solids suspended. Defoaming agent (obtained under the trade designation "FOAMASTER 111" (0.3 g) from Henkel, Edison, New Jersey) and ethylene-vinyl acetate terpolymer latex (obtained under the trade designation "AIRFLEX 600BP" (6.0 g, 55 percent by weight solids) from Air Products are added. Flocculent is added dropwise in amounts as indicated in Table 2. Unexpanded vermiculite (43 g) having a particle size between 20 and 50 mesh is then added. The mixer speed is increased and mixing is continued for from 1 to 5 minutes. The paddle mixer is removed and the slurry is poured into an 8 inches by 8 inches (20 cm by 20 cm) sheet former and drained. The surface of the drained sheet is rolled with a rolling pin to remove excess water. Then, the sheet is pressed between blotter papers at a surface pressure of 13 -14 psi (90 - 97 kPa) for five minutes. The sheet is then dried at 150 ° C in a forced air oven for 10 - 15 minutes, and allowed to equilibrate overnight while exposed to the ambient atmosphere before testing.

### MATERIALS USED IN THE EXAMPLES

Table 1 (below) lists flocculents used in the Examples.

**TABLE 1**

| FLOCCULENT | DESCRIPTION |
|---|---|
| 1 | cationic water-soluble polymer in emulsion, available under the trade designation "ARCTICFLOC 12100" from Orca Water Technologies, Ventura, California |
| 2 | cationic polymer in solution, available under the trade designation "FORMULA 7644" from Garratt Callahan Co., Burlingame, California |
| 3 | cationic polymer in solution, available under the trade designation "FORMULA 7602" from Garratt Callahan Co. |
| 4 | medium high molecular weight, liquid cationic polyelectrolyte, available under the trade designation "ARCTICFLOC 12104" from Orca Water Technologies |
| 5 | cationic polymer in solution, available under the trade designation "FORMULA 7603"from Garratt Callahan Co. |
| 6 | mixture containing polyaluminum hydroxychloride and a cationic organic polymer available under the trade designation "AQUA HAWK 2987" from Hawkins, Inc., Minneapolis, Minnesota |
| 7 | cationic water-soluble polymer in solution available under the trade designation "FORMULA 7552" from Garratt Callahan Co. |
| 8 | cationic polymer in solution, available under the trade designation "FORMULA 7622"from Garratt Callahan Co. |
| 9 | mixture of about 7 percent polyamine and about 33 percent aluminum chloride in water, available under the trade designation "MP 9307C "from Mid South Chemical |
| 10 | cationic polymer in solution, available under the trade designation "FORMULA 7643" from Garratt Callahan Co. |
| 11 | 25-50 percent solution of a cationic homopolymer (2-propen-1-aminium,N,N-dimethyl-N-2-propenyl-, chloride, homopolymer (9Cl)), available under the trade designation "ZETAG 7127" from Ciba Specialty Chemicals, Tarrytown, New York |
| 12 | cationic polymer in solution, available under the trade designation "FORMULA 7655" from Garratt Callahan Co. |
| 13 | 38.5-40 percent solution of organic cationic polyelectrolyte (2-propen-1-aminium,N,N-dimethyl-N-2-propenyl-, chloride, homopolymer (9Cl)), available under the trade designation "ZETAG 7125" from Ciba Specialty Chemicals |
| 14 | mixture of polyaluminum chloride, polyamines, and cationic polymer, available under the trade designation "FORMULA AH-710" from Garratt Callahan Co. |
| 15 | mixture of 28-30 percent polyaluminum hydroxychloride and 11-14 percent polyquaternary amine, available under the trade designation "AQUA HAWK 101" from Hawkins, Inc. |
| 16 | mixture of 38-40 percent polyaluminum hydroxychloride and 2-3 percent polyquaternary amine, available under the trade designation "AQUA HAWK 427" from Hawkins, Inc. |
| 17 | mixture of aluminum based polyinorganic and cationic polymer available under the trade designation "AQUA HAWK 2757" from Hawkins, Inc. |
| 18 | cationic polymer in emulsion available under the trade designation "FORMULA 7568" from Garratt Callahan Co. |
| 19 | cationic polymer in solution, available under the trade designation "FORMULA 7642" from Garratt Callahan Co. |
| 20 | mixture of aluminum chlorohydrate and cationic polymer, available under the trade designation "FORMULA AH-423" from Garratt Callahan Co. |
| 21 | cationic polymer in solution, available under the trade designation "FORMULA 7633" from Garratt Callahan Co. |
| 22 | cationic water-soluble polymer in emulsion, available under the trade designation "FORMULA 7564" from Garratt Callahan Co. |
| 23 | cationic water-soluble polymer in emulsion, available under the trade designation "FORMULA 7542" from Garratt Callahan Co. |
| 24 | cationic water-soluble polymer in emulsion, available under the trade designation "FORMULA 7536" from Garratt Callahan Co. |
| 25 | cationic water-soluble polymer in emulsion, available under the trade designation "FORMULA 7520" from Garratt Callahan Co. |
| 26 | cationic water-soluble polymer in emulsion, available under the trade designation "FORMULA 7516" from Garratt Callahan Co. |
| 27 | cationic water-soluble polymer in emulsion, available under the trade designation "FORMULA 7547" from Garratt Callahan Co. |
| 28 | cationic water-soluble polymer in emulsion, available under the trade designation "FORMULA 7502" from Garratt Callahan Co. |
| 29 | cationic water-soluble polymer in emulsion, available under the trade designation "FORMULA 7506" from Garratt Callahan Co. |
| 30 | cationic water-soluble polymer in emulsion, available under the trade designation "FORMULA 7577" from Garratt Callahan Co. |

### EXAMPLES 1 - 31 AND COMPARATIVE EXAMPLE A

Sheets of fibrous material were prepared according to the General Procedure for Preparing Fibrous Sheet (above) using the flocculents indicated in Table 2. Results of testing of the fibrous sheets are also presented in Table 2 , (below); 1 inc = 2.54 cm/1 pounds per square inch = 0.069 bar

**TABLE 2**

| EXAMPLE | FLOCCULENT, amount in grams | CALIPER MEASUREMENT, inches (average of 5 measurements) | TENSILE STRENGTH TEST, pounds per square inch | CRACKING TEST (smallest diameter mandrel passed in inches) |
|---|---|---|---|---|
| Comparative Example A | None | 0.417 | 2.9, 1.9 | 1 |
| Example 1 | Flocculent 1, 0.98 | 0.329 | 33.4 | 0.5 |
| Example 2 | Flocculent 2, 2.16 | 0.345 | 24.9, 24.9 | 0.5 |
| Example 3 | Flocculent 3, 0.77 | 0.321 | 19.0 | 0.5 |
| Example 4 | Flocculent 4, 0.83 | 0.334 | 24.8 | 0.5 |
| Example 5 | Flocculent 5, 2.01 | 0.323 | 13.0, 13.0, 13.9 | 0.5 |
| Example 6 | Flocculent 6, 1.26 | 0.322 | 24.6 | 0.5 |
| Example 7 | Flocculent 7, 0.83 | 0.271 | 50.1, 51.6, 49.4 | 0.5 |
| Example 8 | Flocculent 8, 0.87 | 0.313 | 20.1, 20.8, 21.7 | 0.75 |
| Example 9 | Flocculent 9, 0.61 | 0.336 | 23.1, 14.0, 20.5 | 1 |
| Example 10 | Flocculent 10, 1.56 | 0.309 | 41.1, 35.0, 31.4 | 1 |
| Example 11 | Flocculent 11, 1.58 | 0.316 | 20.6, 21.8, 24.4 | 1 |
| Example 12 | Flocculent 12, 0.74 | 0.322 | 27.0, 24.5, 24.8 | 1 |
| Example 13 | Flocculent 13, 1.44 | 0.324 | 22.2 | 0.75 |
| Example 14 | Flocculent 14, 0.69 | 0.319 | 21.0, 19.1, 21.6 | 1 |
| Example 15 | Flocculent 9, 0.63 | 0.339 | 27.4 | 2 |
| Example 16 | Flocculent 15, 0.92 | 0.289 | 18.7, 20.0, 18.3 | 2 |
| Example 17 | Flocculent 16, 1.03 | 0.322 | 18.0, 19.9, 20.5 | 2 |
| Example 18 | Flocculent 17, 1.05 | 0.317 | 25.2, 25.5, 23.6 | 2 |
| Example 19 | Flocculent 18, 0.69 | 0.280 | 38.9, 39.3, 37.9 | 2 |
| Example 20 | Flocculent 19, 1.26 | 0.341 | 34.1,33.2 | 2 |
| Example 21 | Flocculent 20, 0.79 | 0.331 | 23.0, 23.0 | 2 |
| Example 22 | Flocculent 21, 1.49 | 0.325 | 18.8, 20.6, 19.7 | 3 |
| Example 23 | Flocculent 22, 0.32 | 0.342 | 17.0, 19.9 | 3 |
| Example 24 | Flocculent 23, 0.59 | 0.323 | 28.8, 33.2, 31.9 | 3 |
| Example 25 | Flocculent 24, 1.0 | 0.296 | 46.9, 41.9, 42.6 | 3 |
| Example 26 | Flocculent 25, 0.47 | 0.318 | 25.8, 20.4 | 3 |
| Example 27 | Flocculent 26 0.96 | 0.293 | 55.2, 52.8, 50.5 | 4 |
| Example 28 | Flocculent 27, 0.68 | 0.283 | 23.3, 22.6, 19.1 | 4 |
| Example 29 | Flocculent 28, 0.92 | 0.321 | 58.0, 57.7, 61.4 | 5 |
| Example 30 | Flocculent 29, 0.86 | 0.446 | 22.0, 22.0, 22.0 | > 6 |
| Example 31 | Flocculent 30, 0.82 | 0.277 | 14.8 | 2 |

### Example 32

Two containers were filled with 1000 milliliters of tap water conditioned to 12 to 14 °C. Ethylene-vinyl acetate terpolymer latex (1.8 grams) available under the trade designation "AIRFLEX 600BP" from Air Products and 0.1 grams of defoamer available under the trade designation "FOAMASTER 111" from Henkel were added to each container and gently mixed in order to disperse the latex. Additionally, 10 grams of inorganic fiber available under the trade designation "HA-BULK" from Thermal Ceramics (partially cleaned such that they contained less than 50% shot by weight) was added to one of the containers and mixed in order to disperse the fibers. A milky appearance was observed in both containers resulting from the latex dispersion in water. Flocculent (0.1 grams) available under the trade designation "7307C" from Mid South Chemical was added to each container with gentle mixing. A marked clearing of the liquid was observed in less than a minute in the container holding both latex and inorganic fibers. In the container without inorganic fibers but containing latex, only a slow agglomeration and clearing of the mixture was observed over a period of more than 5 minutes.

## Claims

1. A flexible fibrous material comprising:
inorganic fibers having a total weight and bonded together by a binder, wherein the binder comprises at least one of:
(a) a first organic polymer and a flocculent, the flocculent comprising a second organic polymer having cationic groups, or
(b) a reaction product of the first organic polymer and the flocculent,
wherein the flexible fibrous material has a total organic component weight that is from 0.5 to 9 percent of the total weight of the inorganic fibers, and wherein the flexible fibrous material has a dry basis weight of from 400 to 15000 grams per square meter, and
wherein, on a dry weight basis, the flexible fibrous material comprises from 40 to 99.5 percent by weight of the inorganic fibers, from greater than 0 up to 60 percent by weight of intumescent material.

2. A flexible fibrous material according to claim 1, wherein, on a dry weight basis, the flexible fibrous material comprises from 91 to 99.5 percent by weight of the inorganic fibers, and wherein the flexible fibrous material has a total organic component weight that is from 0.5 to 3 percent by weight of the inorganic fibers.

3. A flexible fibrous material according to claim 1, further comprising an unexpanded intumescent material.

4. A flexible fibrous material according to any one of claims 1 to 3, wherein on a dry weight basis, the flexible fibrous material comprises less than 50 percent by weight of shot.

5. A pollution control device comprising:
a housing;
a pollution control element disposed within said housing; and
a flexible fibrous material according to any one of claims 1 to 4 disposed adjacent to, or within, the housing.

6. A method of forming a flexible fibrous material comprising the steps:
(a) forming a slurry by mixing, in aqueous solution, components comprising:
inorganic fibers having a total weight; and
organic components, wherein the organic components comprise an emulsified first organic polymer and a flocculent, the flocculent comprising a second organic polymer having cationic groups;
(b) flocculating at least a portion of the emulsified first organic polymer onto at least a portion of the inorganic fibers to provide a flocculated slurry;
(c) dewatering the flocculated slurry to provide a dewatered slurry;
(d) further drying the dewatered slurry to form the flexible fibrous material,
wherein the flexible fibrous material has a total organic component weight of from 0.5 to 9 percent of the total weight of the inorganic fibers,
wherein, on a dry weight basis, the flexible fibrous material comprises from 40 to 99.5 percent by weight of the inorganic fibers, from greater than 0 up to 60 percent by weight of intumescent material.

7. A method of forming a flexible fibrous material according to claim 6, further comprising pressing the dewatered slurry prior to step (d).

8. A method of forming a flexible fibrous material according to claim 6 or 7, wherein step (c) comprises forming the slurry into a sheet material made by a wet laid process, and step (d) comprises forming the flexible fibrous material from the sheet material.

9. A method of forming a flexible fibrous material according to any one of claims 6 to 8, wherein steps (b) and (c) are simultaneous.

10. A method of forming a flexible fibrous material according to any one of claims 6 to 9, wherein, on a dry weight basis, the flexible fibrous material comprises from 91 to 99.5 percent by weight of the inorganic fibers, arid wherein the flexible fibrous material has a total organic component weight that is from 0.5 to 3 percent by weight of the inorganic fibers.

11. A method of forming a flexible fibrous material according to any one of claims 6 to 10, wherein the flocculent further comprises a metal cation.

12. A method of forming a flexible fibrous material according to any one of claims 6 to 11, wherein on a dry weight basis, the flexible fibrous material comprises less than 50 percent by weight of shot.

13. A slurry comprising water having dispersed or dissolved therein:
inorganic fibers having a total weight; and
organic components comprising at least one of:
(a) an emulsified first organic polymer and a flocculent, the flocculent comprising a second organic polymer having cationic groups, or
(b) a reaction product of the emulsified first organic polymer and the flocculent,
wherein the slurry has a total organic component weight that is from 0.5 to 9 percent of the total weight of the inorganic fibers, and
wherein, on a dry weight basis, the flexible fibrous material comprises from 40 to 99.5 percent by weight of the inorganic fibers, from greater than 0 up to 60 percent by weight of intumescent material.

14. A slurry according to claim 13, wherein, on a dry weight basis, the flexible fibrous material comprises from 91 to 99.5 percent by weight of the inorganic fibers, and wherein the flexible fibrous material has a total organic component weight that is from 0.5 to 3 percent by weight of the inorganic fibers.

15. A slurry according to claim 13 or 14, wherein on a dry weight basis, the flexible fibrous material comprises less than 50 percent by weight of shot.

## Patentansprüche

1. Flexibles Fasermaterial, umfassend:
anorganische Fasern, die ein Gesamtgewicht aufweisen und mit einem Bindemittel aneinander gebunden sind, wobei das Bindemittel mindestens eines der Folgenden umfasst:
(a) ein erstes organisches Polymer und ein Flockungsmittel, wobei das Flockungsmittel ein zweites organisches Polymer mit kationischen Gruppen umfasst, oder
(b) ein Reaktionsprodukt des ersten organischen Polymers und des Flockungsmittels,
wobei das flexible Fasermaterial ein Gesamtgewicht organischer Komponenten aufweist, das 0,5 bis 9 Prozent des Gesamtgewichts der anorganischen Fasern beträgt, und wobei das flexible Fasermaterial ein Trockengrundgewicht von 400 bis 15,000 Gramm pro Quadratmeter aufweist und
wobei das flexible Fasermaterial, basierend auf dem Trockengewicht, 40 bis 99,5 Gewichtsprozent der anorganischen Fasern und von mehr als 0 bis zu 60 Gewichtsprozent quellendes Material umfasst.

2. Flexibles Fasermaterial nach Anspruch 1, wobei das flexible Fasermaterial, basierend auf dem Trockengewicht, 91 bis 99,5 Gewichtsprozent der anorganischen Fasern umfasst und wobei das flexible Fasermaterial ein Gesamtgewicht organischer Komponenten aufweist, das bezogen auf das Gewicht der anorganischen Fasern 0,5 bis 3 Prozent beträgt.

3. Flexibles Fasermaterial nach Anspruch 1, ferner ein nicht expandiertes quellendes Material umfassend.

4. Flexibles Fasermaterial nach einem der Ansprüche 1 bis 3, wobei das flexible Fasermaterial, basierend auf dem Trockengewicht, weniger als 50 Gewichtsprozent nicht faserförmiges partikuläres Material (Shots) umfasst.

5. Vorrichtung zur Emissionsminderung, umfassend:
ein Gehäuse,
ein Element zur Emissionsminderung, das in dem Gehäuse angeordnet ist, und
ein flexibles Fasermaterial nach einem der Ansprüche 1 bis 4, das anliegend am oder im Gehäuse angeordnet ist.

6. Verfahren zum Bilden eines flexiblen Fasermaterials, folgende Schritte umfassend:
(a) Bilden einer Aufschlämmung durch Mischen von Komponenten in einer wässrigen Lösung, wobei die Komponenten Folgendes umfassen:
anorganische Fasern mit einem Gesamtgewicht und organische Komponenten, wobei die organischen Komponenten ein emulgiertes erstes organisches Polymer und ein Flockungsmittel umfassen, wobei das Flockungsmittel ein zweites organisches Polymer mit kationischen Gruppen umfasst,
(b) Ausflocken mindestens eines Teils des emulgierten ersten organischen Polymers auf mindestens einen Teil der anorganischen Fasern, um eine geflockte Aufschlämmung bereitzustellen,
(c) Entwässern der geflockten Aufschlämmung, um eine entwässerte Aufschlämmung bereitzustellen,
(d) weiteres Trocknen der entwässerten Aufschlämmung, um das flexible Fasermaterial zu bilden,
wobei das flexible Fasermaterial ein Gesamtgewicht organischer Komponenten von 0,5 bis 9 Prozent des Gesamtgewichts der anorganischen Fasern umfasst,
wobei das flexible Fasermaterial, basierend auf dem Trockengewicht, 40 bis 99,5 Gewichtsprozent der anorganischen Fasern und von mehr als 0 bis zu 60 Gewichtsprozent quellendes Material umfasst.

7. Verfahren zum Bilden eines flexiblen Fasermaterials nach Anspruch 6, ferner vor Schritt (d) das Pressen der entwässerten Aufschlämmung umfassend.

8. Verfahren zum Bilden eines flexiblen Fasermaterials nach Anspruch 6 oder 7, wobei Schritt (c) das Bilden eines Bahnmaterials aus der Aufschlämmung durch ein Nasslegeverfahren umfasst und Schritt (d) das Bilden des flexiblen Fasermaterials aus dem Bahnmaterial umfasst.

9. Verfahren zum Bilden eines flexiblen Fasermaterials nach einem der Ansprüche 6 bis 8, wobei die Schritte (b) und (c) gleichzeitig stattfinden.

10. Verfahren zum Bilden eines flexiblen Fasermaterials nach einem der Ansprüche 6 bis 9, wobei das flexible Fasermaterial, basierend auf dem Trockengewicht, 91 bis 99,5 Gewichtsprozent der anorganischen Fasern umfasst und wobei das flexible Fasermaterial ein Gesamtgewicht organischer Komponenten von 0,5 bis 3 Gewichtsprozent der anorganischen Fasern aufweist.

11. Verfahren zum Bilden eines flexiblen Fasermaterials nach einem der Ansprüche 6 bis 10, wobei das Flockungsmittel ferner ein Metallkation umfasst.

12. Verfahren zum Bilden eines flexiblen Fasermaterials nach einem der Ansprüche 6 bis 11, wobei das flexible Fasermaterial, basierend auf dem Trockengewicht, weniger als 50 Gewichtsprozent nicht faserförmiges partikuläres Material (Shots) umfasst.

13. Aufschlämmung, Wasser umfassend, in dem Folgendes dispergiert oder aufgelöst ist:
anorganische Fasern mit einem Gesamtgewicht und
organische Komponenten, die mindestens eines der Folgenden umfassen:
(a) ein emulgiertes erstes organisches Polymer und ein Flockungsmittel, wobei das Flockungsmittel ein zweites organisches Polymer mit kationischen Gruppen umfasst, oder
(b) ein Reaktionsprodukt des emulgierten ersten organischen Polymers und des Flockungsmittels,
wobei die Aufschlämmung ein Gesamtgewicht organischer Komponenten aufweist, das 0,5 bis 9 Prozent des Gesamtgewichts der anorganischen Fasern umfasst, und
wobei das flexible Fasermaterial, basierend auf dem Trockengewicht, 40 bis 99,5 Gewichtsprozent der anorganischen Fasern und von mehr als 0 bis zu 60 Gewichtsprozent quellendes Material umfasst.

14. Aufschlämmung nach Anspruch 13, wobei das flexible Fasermaterial, basierend auf dem Trockengewicht, 91 bis 99,5 Gewichtsprozent der anorganischen Fasern umfasst und wobei das flexible Fasermaterial ein Gesamtgewicht organischer Komponenten aufweist, das bezogen auf das Gewicht der anorganischen Fasern 0,5 bis 3 Gewichtsprozent beträgt.

15. Aufschlämmung nach Anspruch 13 oder 14, wobei das flexible Fasermaterial, basierend auf dem Trockengewicht, weniger als 50 Gewichtsprozent nicht faserförmiges partikuläres Material (Shots) umfasst.

## Revendications

1. Matériau fibreux flexible comprenant :
des fibres inorganiques ayant un poids total et liées les unes aux autres par un liant, le liant comprenant au moins l'un de :
(a) un premier polymère organique et un agent de floculation, l'agent de floculation comprenant un deuxième polymère organique contenant des groupes cationiques, ou
(b) un produit réactionnel du premier polymère organique et de l'agent de floculation,
le matériau fibreux flexible ayant un poids total de constituants organiques qui représente de 0,5 % à 9 % du poids total des fibres inorganiques, et le matériau fibreux flexible ayant un poids sec de 400 à 15 000 grammes par mètre carré et, en poids sec, le matériau fibreux flexible comprenant de 40 % à 99,5 % en poids des fibres inorganiques, et de plus de 0 à 60 % en poids de matériau intumescent.

2. Matériau fibreux flexible selon la revendication 1, le matériau fibreux flexible comprenant, en poids sec, de 91 % à 99,5 % en poids des fibres inorganiques, et le matériau fibreux flexible ayant un poids total de constituants organiques qui représente de 0,5 % à 3 % en poids des fibres inorganiques.

3. Matériau fibreux flexible selon la revendication 1, comprenant en outre un matériau intumescent non expansé.

4. Matériau fibreux flexible selon l'une quelconque des revendications 1 à 3, le matériau fibreux flexible comprenant, en poids sec, moins de 50 % en poids de matériau particulaire non-fibreux (shot).

5. Dispositif antipollution comprenant :
un boîtier ;
un élément antipollution disposé à l'intérieur dudit boîtier ; et
un matériau fibreux flexible selon l'une quelconque des revendications 1 à 4, disposé de façon adjacente au boîtier, ou à l'intérieur du boîtier.

6. Procédé de formation d'un matériau fibreux flexible, comprenant les étapes qui consistent à :
(a) former une suspension par mélange, en solution aqueuse, de constituants comprenant :
des fibres inorganiques ayant un poids total ; et
des constituants organiques, les constituants organiques comprenant un premier polymère organique émulsifié et un agent de floculation,
l'agent de floculation comprenant un deuxième polymère organique contenant des groupes cationiques ;
(b) floculer au moins une partie du premier polymère organique émulsifié sur au moins une partie des fibres inorganiques pour produire une suspension floculée ;
(c) essorer la suspension floculée pour produire une suspension essorée ;
(d) sécher davantage la suspension essorée pour former le matériau fibreux flexible,
le matériau fibreux flexible ayant un poids total de constituants organiques qui représente de 0,5 % à 9 % du poids total des fibres inorganiques et, en poids sec, le matériau fibreux flexible comprenant de 40 % à 99,5 % en poids des fibres inorganiques, et de plus de 0 à 60 % en poids de matériau intumescent.

7. Procédé de formation d'un matériau fibreux flexible selon la revendication 6, comprenant en outre le pressage de la suspension essorée avant l'étape (d).

8. Procédé de formation d'un matériau fibreux flexible selon la revendication 6 ou 7, dans lequel l'étape (c) comprend la formation d'un matériau sous forme de feuille à partir de la suspension par un procédé de formation par voie humide, et l'étape (d) comprend la formation du matériau fibreux flexible à partir du matériau sous forme de feuille.

9. Procédé de formation d'un matériau fibreux flexible selon l'une quelconque des revendications 6 à 8, dans lequel les étapes (b) et (c) sont simultanées.

10. Procédé de formation d'un matériau fibreux flexible selon l'une quelconque des revendications 6 à 9, dans lequel, en poids sec, le matériau fibreux flexible comprend de 91 % à 99,5 % en poids des fibres inorganiques, et dans lequel le matériau fibreux flexible a un poids total de constituants organiques qui représente de 0,5 % à 3 % en poids des fibres inorganiques.

11. Procédé de formation d'un matériau fibreux flexible selon l'une quelconque des revendications 6 à 10, dans lequel l'agent de floculation comprend en outre un cation métallique.

12. Procédé de formation d'un matériau fibreux flexible selon l'une quelconque des revendications 6 à 11, dans lequel, en poids sec, le matériau fibreux flexible comprend moins de 50 % en poids de matériau particulaire non-fibreux (shot).

13. Suspension comprenant de l'eau dans laquelle sont dispersés ou dissous :
des fibres inorganiques ayant un poids total ; et
des constituants organiques comprenant au moins l'un de :
(a) un premier polymère organique émulsifié et un agent de floculation, l'agent de floculation comprenant un deuxième polymère organique contenant des groupes cationiques, ou
(b) un produit réactionnel du premier polymère organique émulsifié et de l'agent de floculation,
la suspension ayant un poids total de constituants organiques qui représente de 0,5 % à 9 % du poids total des fibres inorganiques et, en poids sec, le matériau fibreux flexible comprenant de 40 % à 99,5 % en poids des fibres inorganiques, et de plus de 0 à 60 % en poids de matériau intumescent.

14. Suspension selon la revendication 13, dans laquelle, en poids sec, le matériau fibreux flexible comprend de 91 % à 99,5 % en poids des fibres inorganiques, et dans laquelle le matériau fibreux flexible a un poids total de constituants organiques qui représente de 0,5 % à 3 % en poids des fibres inorganiques.

15. Suspension selon la revendication 13 ou 14, dans laquelle, en poids sec, le matériau fibreux flexible comprend moins de 50 % en poids de matériau particulaire non-fibreux (shot).
